# EUROPÄISCHE PATENTSCHRIFT

(11) **EP 3 294 524 B1**
(45) Veröffentlichungstag und Bekanntmachung des Hinweises auf die Patenterteilung: **15.12.2021**
(21) Anmeldenummer: 16823255.1
(22) Anmeldetag: 19.12.2016
(51) Int. Cl.: B29C 49/48, B29C 49/46, B29C 49/36

(54) **VORRICHTUNG ZUM UMFORMEN VON KUNSTSTOFFVORFORMLINGEN ZU KUNSTSTOFFBEHÄLTNISSEN MIT WECHSELEINRICHTUNG IN MODULBAUWEISE**
DEVICE FOR SHAPING PLASTIC PREFORMS INTO PLASTIC CONTAINERS WITH A CHANGING DEVICE HAVING A MODULAR DESIGN
DISPOSITIF DE DÉFORMATION DE PRÉFORMES EN MATIÈRE PLASTIQUE POUR PRODUIRE DES RÉCIPIENTS EN MATIÈRE PLASTIQUE, MUNI D'UN DISPOSITIF DE CHANGEMENT DE MOULE DE CONCEPTION MODULAIRE

(30) Priorität: 18.12.2015 DE 102015122310
(43) Veröffentlichungstag der Anmeldung: 21.03.2018
(73) Patentinhaber: KRONES AG, 93073 Neutraubling (DE)
(72) Erfinder: HACK, Andreas, 93073 Neutraubling (DE); SUPPES, Waldemar, 93073 Neutraubling (DE); SCHEPP, Berndt, 93073 Neutraubling (DE); SÖLLNER, Jürgen, 93073 Neutraubling (DE); GELTINGER, Florian, 93073 Neutraubling (DE)
(74) Vertreter: Bittner, Bernhard
(86) Internationale Anmeldenummer: PCT/EP2016/081775
(87) Internationale Veröffentlichungsnummer: WO 2017/103273

(56) Entgegenhaltungen:
- EP-A1- 2 918 391
- EP-A2- 2 292 402
- WO-A1-2015/072504
- DE-A1-102011 052 574
- DE-A1-102011 054 890
- DE-A1-102013 113 076
- US-A1- 2015 145 180
- US-A1- 2015 151 455
- US-A1- 2015 266 284

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden üblicherweise Kunststoffvorformlinge erwärmt und anschließend in einer Umformungseinrichtung, wie beispielsweise einer Blasformmaschine oder Streckblasmaschine, zu Kunststoffbehältnissen umgeformt. In jüngerer Zeit sind auch Umformungseinrichtungen bekannt geworden, bei denen dieser Umformungsvorgang, beispielsweise ein Streckblasvorgang, unter sterilen Bedingungen bzw. innerhalb eines Reinraums durchgeführt wird. Im Stand der Technik ist es bei derartigen Maschinen üblich, dass des Öfteren Blasformeinheiten, beispielsweise Blasformen, gewechselt werden. Dies kann beispielsweise erforderlich sein, wenn von einer Behältnissorte auf eine andere Behältnissorte umgestellt werden muss. Aus dem Stand der Technik sind auch Wechseleinrichtungen, wie Wechselroboter, bekannt, welche einen derartigen Wechsel von Blasformen durchführen.

DE102011052574A1 offenbart Vorrichtungen und Verfahren nach den Oberbegriffen der Ansprüche 1 und 8.

Insbesondere bei sterilen Blasformmaschinen ist ein derartiger Wechsel von Blasformen jedoch üblicherweise sehr aufwendig, da ein Reinraum geöffnet werden muss und anschließend eine vollständige Re-Sterilisation durchgeführt wird.

Der vorliegenden Erfindung liegt daher die Aufgabe zugrunde, derartige Wechselvorgänge, insbesondere bei sterilen Umformungseinrichtungen, zu erleichtern. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Es wird daher erfindungsgemäß vorgeschlagen, bei einer sterilen Blasformmaschine eine Wechseleinrichtung, wie beispielsweise einen Wechselroboter, vorzusehen, der den Wechsel der Blasformeinrichtungen wenigstens teilautomatisch und bevorzugt vollautomatisch übernimmt. Durch eine entsprechende Ausgestaltung der Reinräume und bevorzugt auch eines Reinraums der Wechseleinrichtung kann dabei eine Möglichkeit geschaffen werden, dass auch bei einem Wechsel der Blasformen nicht notwendigerweise der gesamte Reinraum kontaminiert wird und dass auf eine Re-Sterilisation verzichtet werden kann oder diese zumindest im Vergleich zum Stand der Technik einfacher gestaltet werden kann. Bevorzugt handelt es sich bei dem bewegbaren Träger, an dem die Umformungsstationen angeordnet sind um einen drehbaren Träger.

Bei einer weiteren vorteilhaften Ausführungsform handelt es sich bei dem Reinraum der Umformungseinrichtung um einen Reinraum, der den Transportpfad der umzuformenden Kunststoffvorformlinge kanalartig umgibt. Bevorzugt ist auch wenigstens eine Drehachse des Trägers, an den die Umformungsstationen angeordnet sind, außerhalb des Reinraums. Auf diese Weise kann das Volumen des Reinraums erheblich reduziert werden.

Bei einer weiteren vorteilhaften Ausführungsform wird der Reinraum durch wenigstens zwei bezüglich einander bewegliche Wandungen abgegrenzt. Zwischen diesen beiden beweglichen Wandungen kann eine Dichtungseinrichtung und insbesondere ein sogenanntes Wasserschloss vorgesehen sein. Eine dieser Wandungen und insbesondere eine radial innen angeordnete Wandung kann dabei durch den Träger, an dem die Umformungsstationen angeordnet sind, ausgebildet sein.

Erfindungsgemäss handelt es sich bei der Umformungseinrichtung um eine Blasformmaschine und insbesondere um eine Streckblasmaschine. Bevorzugt weist daher die Umformungseinrichtung auch an jeder Umformungsstation einen stangenartigen Körper auf, der in die Kunststoffvorformlinge einführbar ist, um diese in deren Längsrichtung zu dehnen.

Bei einer weiteren vorteilhaften Ausführungsform weisen die Umformungsstationen auch jeweils Beaufschlagungseinrichtungen auf, welche die Kunststoffvorformlinge mit einem gasförmigen Medium und insbesondere mit Blasluft beaufschlagen. Diese Beaufschlagungseinrichtungen können dabei an eine Mündung der Behältnisse angelegt werden, um diese zu expandieren bzw. aufzublasen. Insbesondere handelt es sich bei diesen Beaufschlagungseinrichtungen um Blasdüsen.

Bei einer weiteren vorteilhaften Ausführungsform weist das Modul der Wechseleinrichtung ein Tragelement auf, um wesentliche Komponenten der Wechseleinrichtung zu tragen, beispielsweise einen Träger des Roboters und damit mittelbar auch Wechseleinrichtungen, wie beispielsweise Wechselarme. Bevorzugt sind die wesentlichen Komponenten der Wechseleinrichtungen an diesem Tragelement befestigt. Dabei können Lagerelemente vorgesehen sein, welche eine schwenkbare oder drehbare Lagerung von Elementen der Wechseleinrichtung gegenüber dem Tragelement ermöglichen.

Bei einer weiteren bevorzugten Ausführungsform handelt es sich bei der Wechseleinrichtung um einen Blasformwechselroboter.

Die Vorrichtung weist Steuerungseinrichtungen auf, um die Wechseleinrichtung zu steuern. Dabei sind auch Sensorelemente vorgesehen, welche Positionen der Blasformeinrichtungen erfassen und eine Steuerung der Wechseleinrichtung in Abhängigkeit von derart erfassten Positionen ermöglichen. Weiter steht diese Steuerungseinrichtung für die Wechseleinrichtung in einer Kommunikationsverbindung mit Steuerungseinrichtungen der Blasformmaschine und/oder mit Steuerungseinrichtungen der gesamten Anlage zum Herstellen von Behältnissen. Bei einer weiteren bevorzugten Ausführungsform weist die Wechseleinrichtung wenigstens eine Greifeinrichtung zum Greifen der Blasformeinrichtungen oder von Bestandteilen der Blasformeinrichtungen wie etwa den Seitenteilen der Blasformeinrichtung oder einem Bodenteil der Blasformeinrichtung auf. Diese Greifeinrichtung kann dabei als aktive Greifeinrichtung ausgestaltet sein, welche zum Greifen der Blasformeinrichtungen aktivierbar ist.

Bei einer weiteren vorteilhaften Ausführungsform weist das Modul der Wechseleinrichtung Schutzeinrichtungen auf, beispielsweise Schutzwände, welche ein Betreten der Wechseleinrichtung verhindern. Dabei können auch diese Schutzeinrichtungen Steuerungseinrichtungen aufweisen, welche beispielsweise ein gewolltes Öffnen und Schließen der Schutzeinrichtungen ermöglichen. So könnten beispielsweise Schiebetüren oder dergleichen vorgesehen sein, über welche dem Modul der Wechseleinrichtung zu wechselnde Blasformeinrichtungen oder auch Magazine für Blasformeinrichtungen zugeführt werden können.

Bei einer weiteren vorteilhaften Ausführungsform weist die Vorrichtung eine Eingabeeinrichtung auf, um einen Blasformwechsel zu steuern und/oder die Wechseleinrichtung zu steuern. Dabei kann es sich beispielsweise um ein Eingabepanel handeln, welches dabei bevorzugt auch außerhalb des Reinraums bzw. außerhalb der Schutzeinrichtungen angeordnet sein kann, um eine bequeme Bedienung der Wechseleinrichtung zu ermöglichen. Daneben wäre es möglich, dass ein derartiges Eingabepanel drahtlos mit einer Steuerung der Wechseleinrichtung kommuniziert.

Bei einer weiteren vorteilhaften Ausführungsform sind in den oben erwähnten Schutzeinrichtungen Öffnungen vorgesehen, um Formen d.h. Blasformeinrichtungen oder auch Formenmagazine in einen Schutzbereich einzubringen und/oder um einen Zugang zu der Umformungseinrichtung zu ermöglichen.

Bei einer weiteren vorteilhaften Ausführungsform weist das Modul auch Anschlag- oder Befestigungspunkte auf, um das Modul in seiner Gesamtheit zu transportieren. So kann es beispielsweise möglich sein, dass das Modul in seiner Gesamtheit verschoben wird. Dabei ist es denkbar, dass das Modul entlang eines genau definierten Transportpfads transportierbar ist, beispielsweise entlang eines geradlinigen Transportpfads. Vorteilhaft ist das Modul in einer Richtung bewegbar, entlang derer sich auch die Erwärmungseinrichtung erstreckt, genauer, parallel oder entgegengesetzt zu derjenigen Richtung entlang derer die Kunststoffvorformlinge während ihrer Erwärmung transportiert werden. Es wäre jedoch auch eine Bewegbarkeit schräg zu dieser Richtung möglich.

Bei einer weiteren vorteilhaften Ausführungsform weist das Modul auch Standfüße bzw. Maschinenfüße auf, um das Modul auf den Boden abzustellen und gegebenenfalls auch dort zu befestigen.

Bei einer weiteren vorteilhaften Ausführungsform weist das Modul eine Schnittstelle auf, mittels derer das Modul an eine Umformungseinrichtung, wie beispielsweise eine Blasformmaschine, angebunden werden kann. Diese Schnittstelle kann dabei insbesondere auch Schließmechanismen aufweisen, um eine Verbindung zwischen der Wechseleinrichtung bzw. dem Modul der Wechseleinrichtung und der Blasformeinrichtung herzustellen oder zu unterbrechen. Insbesondere ist dabei eine entsprechende Verbindungsöffnung groß genug, dass durch diese hindurch Blasformen eingewechselt werden können. Vorteilhaft kann dabei diese Schnittstelle in der Art eines Flansches ausgeführt sein. Dabei kann beispielsweise eine Öffnung von einem Rahmenelement umgeben sein, an welches wiederum ein entsprechendes Rahmenelement der Schnittstelle bzw. des Wechseleinrichtungsmoduls anknüpfen bzw. eine Verbindung herstellen kann.

Besonders bevorzugt erlaubt dabei diese Schnittstelle eine derartige Anbindung an den Reinraum der Umformungseinrichtung, dass die Sterilität des Reinraums aufrecht erhalten werden kann. So kann die Schnittstelle insbesondere eine Anbindung erlauben, welche gegenüber einer (unsterilen) Umgebung abgedichtet ist.

Bei einer weiteren vorteilhaften Ausführungsform weist die Wechseleinrichtung bzw. das Modul elektrische Hardware-Komponenten auf, welche alle wesentlichen Funktionen der Wechseleinrichtung steuern können. Daneben sind bevorzugt elektrische Hardware-Komponenten vorgesehen, die einen Signalaustausch der Robotersteuerung und/oder der Sicherungseinrichtung und/oder etwaiger Aktoren und Sensoren mit einer übergeordneten Blasmaschinen- und Anlagensteuerung ermöglichen. Bevorzugt weist die Wechseleinrichtung wenigstens eine Aktoreinrichtung auf, welche aus einer Gruppe von Aktoreinrichtungen ausgewählt ist, welche elektrisch betriebene Aktoreinrichtungen, pneumatisch betriebene Aktoreinrichtungen, hydraulisch betriebene Aktoreinrichtungen, magnetisch betriebene Aktoreinrichtungen und dergleichen enthält.

Bei einer weiteren vorteilhaften Ausführungsform ist das Tragelement des Moduls in einer Sandwich-Bauweise ausgeführt. So kann ein Untergurt, ein Obergurt und Spanten vorgesehen sein, um einerseits eine hohe Festigkeit, andererseits jedoch auch ein geringes Gewicht und niedrige Kosten zu erreichen. Vorteilhaft ist die Schnittstelle zur Umformungseinrichtung blick- und schalldicht ausgeführt und besonders bevorzugt elektrisch und/oder pneumatisch und/oder hydraulisch verfahrbar umgesetzt. In einer bevorzugten Ausführungsvorm kann die Bedieneinrichtung und/oder die Steuerungseinrichtung unterhalb der Wechseleinrichtung selbst positioniert sein, sodass dessen Bedienseite aus dem Schutzbereich herausragt und eine Bedienung von außerhalb zulässt.

Es wird daher insgesamt vorgeschlagen, dass das Formwechselsystem bzw. die Wechseleinrichtung als eigenständiges Modul ausgeführt ist.

Bei einer weiteren vorteilhaften Ausführungsform weist die Vorrichtung eine Erwärmungseinrichtung auf, welche die Kunststoffvorformlinge erwärmt. Diese Erwärmungseinrichtung ist dabei bevorzugt der Umformungseinrichtung vorgeschaltet.

Bei einer weiteren vorteilhaften Ausführungsform ist das Wechseleinrichtungsmodul parallel zu diesem Ofen für die Kunststoffvorformlinge ausgerichtet (und bevorzugt auch in dieser parallelen Richtung bewegbar). Vorteilhaft sind dabei die einzelnen Komponenten der Wechseleinrichtung bzw. des gesamten Systems in einer parallel zu der Heizeinrichtung verlaufenden Linie angeordnet. Auf dieser Linie kann beispielsweise die Mitte eines Blasrades bzw. des drehbaren Trägers angeordnet sein sein, anschließend eine Zentriereinheit, welche zum Zentrieren des Blasrades während eines Wechselvorgangs dient. Weiterhin kann entlang der Linie auch eine Einrichtung zum Öffnen der Blasformeinrichtung vorgesehen sein, weiterhin auch die Wechseleinrichtung selbst sowie gegebenenfalls auch eine Magazineinrichtung zum Aufbewahren von Blasformen. Durch diese Anordnung ist eine sehr platzsparende Bauweise der Anlage möglich.

Besonders bevorzugt ist die Wechseleinrichtung derart ausgelegt, dass ein Be- und Entladen mit Blasformeinrichtungen und/oder mit Magazinen für die Blasformeinrichtungen jedenfalls entlang der vorgegebenen Richtung des Wechseleinrichtungsmoduls erfolgt. So kann beispielsweise ein Benutzer ein Magazin mit Blasformeinrichtungen entlang dieser Linie bzw. bevorzugt entlang einer parallel zu dem Ofen verlaufenden Richtung der Wechseleinrichtung zuführen.

Die Wechseleinrichtung ist innerhalb eines Schleusenraums angeordnet, der in Verbindung mit dem Reinraum der Umformungseinrichtung bringbar ist. Auf diese Weise wird also vorgeschlagen, dass ein Schleusenraum vorgesehen ist, innerhalb dessen sich die Wechseleinrichtungen - gegebenenfalls auch mit weiteren Einrichtungen, wie einem Magazin für Blasformeinrichtungen - befindet.

Das Modul der Wechseleinrichtung bildet selbst diesen Schleusenraum aus. Der Schleusenraum ist gegenüber einer (unsterilen) Umgebung abgrenzbar und bevorzugt auch gasdicht abgrenzbar, um innerhalb dieses Schleusenraums sterile Bedingungen aufrecht erhalten zu können.

Bei einer weiteren vorteilhaften Ausführungsform weist die Vorrichtung einen Verschließmechanismus auf, um eine Verbindung zwischen dem Schleusenraum und dem Reinraum zu verschließen. Auf diese Weise kann beispielsweise während eines Arbeitsbetriebs der Umformungseinrichtung die Wechseleinrichtung auch gasdicht von dem Reinraum abgekoppelt werden und beispielsweise die Wechseleinrichtung bzw. das Modul mit einem neuen Magazin für Blasformeinrichtungen bestückt werden. Bei diesem Verschließmechanismus kann es sich beispielsweise um eine verschließbare Klappe, ein Rollo oder dergleichen handeln, welche (insbesondere zum Abkoppeln der Wechseleinrichtung) geschlossen werden kann.

Bei einer weiteren vorteilhaften Ausführungsform weist die Wechseleinrichtung eine Magazineinrichtung zur Aufnahme von Blasformeinrichtungen auf. Durch diese Vorgehensweise kann eine halb- oder vollautomatische Einwechslung von Blasformen erreicht werden. So kann beispielsweise der Maschinenbediener dem Wechseleinrichtungsmodul eine derartige Magazineinrichtung zuführen und anschließend die Wechseleinrichtung selbst den Wechsel durchführen.

Bei einer weiteren vorteilhaften Ausführungsform weist die Vorrichtung eine Beaufschlagungseinrichtung auf, um den Schleusenraum mit einem Sterilisationsmedium zu beaufschlagen. Auf diese Weise kann beispielsweise nach einem durchgeführten Wechsel eine Re-Sterilisation des Schleusenraums vorgenommen werden. Vorteilhaft handelt es sich bei dem Sterilisationsmedium um gasförmiges Wasserstoffperoxid (H₂O₂), bevorzugt um gasförmiges Wasserstoffperoxid in geringer Konzentration.

Bei einer weiteren Ausgestaltung wäre es möglich, dass die Vorrichtung eine Sterilisationseinrichtung zum Sterilisieren von Kunststoffbehältnissen und insbesondere von Kunststoffvorformlingen aufweist. Der Vorteil in der Sterilisation der Kunststoffvorformlinge besteht darin, dass diese noch eine geringere Oberfläche aufweisen und daher mit weniger Sterilisationsmittel sterilisiert werden können. Vorteilhaft ist eine solche Sterilisationseinrichtung zwischen einer Erwärmungseinrichtung und der Umformungseinrichtung angeordnet.

Diese Sterilisationseinrichtung kann dabei bevorzugt eine Abluftleitung aufweisen, welche (immer noch) mit Sterilisationsmedium versetztes Gas abführt. Diese Abluftleitung kann verwendet werden, um den Schleusenraum zu resterilisieren.

So wäre es denkbar, dass der oben erwähnte Schleusenraum geöffnet wird, um diesem eine Magazinvorrichtung zuzuführen. Anschließend kann der Schleusenraum geschlossen werden. In diesem geschlossenen Zustand können der Innenraum des Schleusenraums und/oder die darin angeordneten Elemente (insbesondere die Wechseleinrichtung, die Magazineinrichtung und ggfs. auch die Blasformeirichtungen selbst) resterilisiert werden. Nachdem dieser Vorgang abgeschlossen ist, kann eine Verbindung zwischen dem Reinraum der Umformungseinrichtung und dem Schleusenraum geöffnet werden und die Wechseleinrichtung kann den Wechsel der Blasformeinrichtungen vornehmen.

Bei einer weiteren vorteilhaften Ausführungsform weist das Wechseleinrichtungsmodul Schutzelemente zum Abgrenzen des Moduls gegenüber der Umgebung auf. So ist es möglich, dass das Wechseleinrichtungsmodul selbst einen Raum ausbilden kann, der gegenüber der Umgebung vollständig abgegrenzt ist. Hierbei kann es sich insbesondere um den oben erwähnten Schleusenraum handeln. Dies kann insbesondere zur Durchführung eines Blasformwechsels vorteilhaft sein, da in diesem Fall das Wechseleinrichtungsmodul unmittelbar mit dem Reinraum der Umformungseinrichtung verbunden werden kann. Bei diesen Schutzelementen kann es sich beispielsweise um Wandungen handeln, welche besonders bevorzugt auch keinen Gasdurchtritt zulassen.

Dabei ist auch hier die Wechseleinrichtung in ein eigenständiges Wechseleinrichtungsmodul integriert. Dieses Wechseleinrichtungsmodul kann auch hier wieder abgrenzende Wandungen aufweisen, welche dieses Modul umgeben. Vorteilhaft ist jedoch bei dieser Ausgestaltung kein Deckenabschnitt vorgesehen, das heißt der Arbeitsraum, in dem die Wechseleinrichtung arbeitet, kann bevorzugt nach oben offen sein.

Bei einer weiteren vorteilhaften Ausführungsform ist das Wechseleinrichtungsmodul gegenüber der Umformungseinrichtung bewegbar.

Die Wechseleinrichtung weist eine Identifizierungseinrichtung auf, welche zum Identifizieren von Blasformen und/oder Blasformteilen dient. Dabei weist diese Identifizierungseinrichtung eine Erfassungseinrichtung, d.h. eine RFID-Erfassungseinrichtung auf. Insbesondere auch im Hinblick auf eine sterile Ausführung ergeben sich jedoch Vorteile, da auch im Wechselbetrieb die Blasformeinrichtungen, insbesondere berührungslos, und ohne ein Öffnen des oben erwähnten Schleusenraums identifiziert werden können.

Auch die oben bzw. im Folgenden beschriebenen Ausführungsformen können, soweit sie sich nicht auf die Sterilität beziehen, für die unsterile Ausgestaltung Anwendung finden Bei einer weiteren vorteilhaften Ausführungsform weist wenigstens eine Blasformeinrichtung ein von einer RFID-Erfassungseinrichtung auslesbares RFID-Element auf.

Bevorzugt weist die Wechseleinrichtung eine Positionserfassungseinrichtung zum Erfassen einer geometrischen Position von Blasformeinrichtungen und/oder Blasformteilen auf. Auch dies kann vorteilhaft für eine sterile Maschine sein, da in diesem Falle auch Kollisionen oder Falschstellungen erkannt werden bzw. korrigiert werden können ohne dass es hierzu eines Eingriffs eines Benutzers in einen Reinraum bedarf.

Vorteilhaft werden die Kunststoffvorformlinge innerhalb eines Reinraums zu den Kunststoffbehältnissen expandiert und dieser Reinraum wird bevorzugt mit wenigstens einer Wandung gegenüber einer Umgebung abgetrennt bzw. abgedichtet.

Bei einer weiteren vorteilhaften Ausführungsform bildet das Modul der Wechseleinrichtung einen Schleusenraum aus. Dabei ist es bevorzugt möglich, dass auch dieser Schleusenraum zumindest zeitweise vollständig gegenüber der Umgebung abgedichtet wird und auf diese Weise eine Möglichkeit geschaffen wird, dass Blasformeinrichtungen gewechselt werden, ohne dass hierbei der Reinraum der Blasformmaschine kontaminiert wird. Vorzugsweise steht dieser Schleusenraum wenigstens zeitweise unter einem Überdruck, das heißt genauer einem Überdruck gegenüber dem Umgebungsdruck. Dabei ist es möglich, dass auch ein Reinraum der Umformungseinrichtung unter einem Überdruck gegenüber der (unsterilen) Umgebung steht. Bevorzugt ist ein Druck innerhalb eines Reinraums der Umformungseinrichtung größer als ein Druck innerhalb des Schleusenraums, so dass bevorzugt beim Öffnen einer Verbindung zwischen dem Reinraum und dem Schleusenraum eine Gasströmung von dem Reinraum in den Schleusenraum verläuft.

Bei einem weiteren bevorzugten Verfahren greift wenigstens eine Greifeinrichtung der Wechseleinrichtung eine Blasformeinrichtung in einem bezogen auf eine Längsrichtung der Blasformeinrichtung oberen Bereich. Bei dieser Ausgestaltung ist es möglich, dass zum Wechseln zunächst die Blasformeinrichtung von einer Greifeinrichtung gegriffen wird, und anschließend die Blasformträger geöffnet werden, sodass die besagte Blasform aus der Maschine entnommen werden kann.

Bei einem weiteren bevorzugten Verfahren wird eine Positionierung wenigstens einer Blasformeinrichtung erfasst. Auf diese Weise ist ein sichereres Wechseln der Blasformeinrichtungen möglich.

Weitere Vorteile und Ausführungsformen ergeben sich aus den beigefügten Zeichnungen.

Darin zeigen:
- Fig. 1: Eine schematische Darstellung einer erfindungsgemäßen Vorrichtung zum Herstellen von Kunststoffbehältnissen;
- Fig. 2: eine Darstellung einer erfindungsgemäßen Vorrichtung mit Wechseleinrichtung;
- Fig. 3: eine weitere Darstellung einer Blasformeinrichtung mit Wechseleinrichtung; und
- Fig. 4: eine perspektivische Darstellung einer Blasformmaschine mit Wechseleinrichtung.

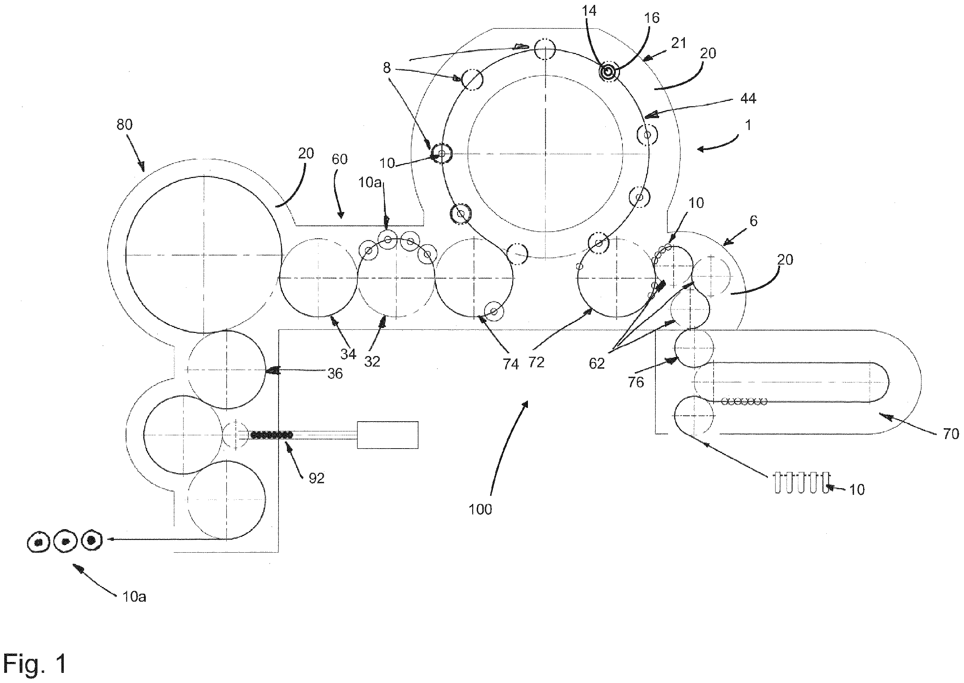

Fig. 1 zeigt eine schematische Darstellung einer Anlage 100 zum Herstellen von Kunststoffbehältnissen. Dabei ist eine Erwärmungseinrichtung 70 vorgesehen, in welche Kunststoffvorformlinge 10 eingeführt werden. Innerhalb dieser Erwärmungseinrichtung 70, bei der er sich insbesondere um einen Infrarotofen handelt, werden die Kunststoffvorformlinge erwärmt und anschließend mit einer Transporteinrichtung 76 wie einem Ausführrad ausgeführt. Anstelle einer Infrarot-Erwärmungseinrichtung könnte jedoch auch eine Mikrowellen-Erwärmungseinrichtung verwendet werden. Auch wäre es möglich, dass eine Spritzgussmaschine vorgesehen ist, welche Kunststoffvorformlinge 10 erzeugt.

Das Bezugszeichen 6 kennzeichnet eine Sterilisationseinrichtung, welche zum Sterilisieren der Kunststoffvorformlinge 10 dient. Im Bereich dieser Sterilisationseinrichtung 6 ist bereits ein Reinraum 20 ausgebildet. Nach dieser Sterilisation werden die Kunststoffvorformlinge 10 über einen Transportstern 72 an die eigentliche Umformungseinrichtung 1 übergeben. Diese Umformungseinrichtung 1 weist, wie oben erwähnt, eine Vielzahl von Umformungsstationen bzw. Blasstationen 8 auf, welche die Kunststoffvorformlinge 10 zu deren Expansion mit Blasluft beaufschlagen. Auch diese Umformung findet innerhalb des Reinraums 20 statt. Der Reinraum wird hier mittels einer Wandung 21 gegenüber einer Umgebung abgegrenzt. Das Bezugszeichen 44 kennzeichnet den Transportpfad der Kunststoffbehältnisse während ihrer Expansion. Dieser Transportpfad verläuft bevorzugt kreisförmig. Jede Umformungsstation weist dabei einen Blasformträger 16 (nur schematisch gezeigt) auf, an dem eine Blasformeinrichtung 14 angeordnet ist. Diese Blasformeinrichtung setzt sich dabei bevorzugt aus zwei Seitenteilen und einem Bodenteil zusammen.

Die nunmehr gefertigten Behältnisse 10a werden mittels eines Ausführsterns 74 ausgeführt. Anschließend können die Behältnisse 10a mittels Transporteinrichtungen 32 und 34 weiter transportiert werden und dabei insbesondere zu einer Fülleinrichtung 80 transportiert werden, in der sie befüllt werden. Optional wäre es auch hier denkbar, dass eine Sterilisationseinrichtung 60 vorgesehen ist, welche die Behältnisse 10a sterilisiert. Das Bezugszeichen 92 kennzeichnet eine Zuführeinrichtung, welche den Behältnissen Verschlüsse zuführt, damit diese verschlossen werden können. Das Bezugszeichen 36 kennzeichnet eine Transporteinrichtung, welche die Befüllten Behältnisse von der Fülleinrichtung 8 zu der Verschließeinrichtung transportiert.

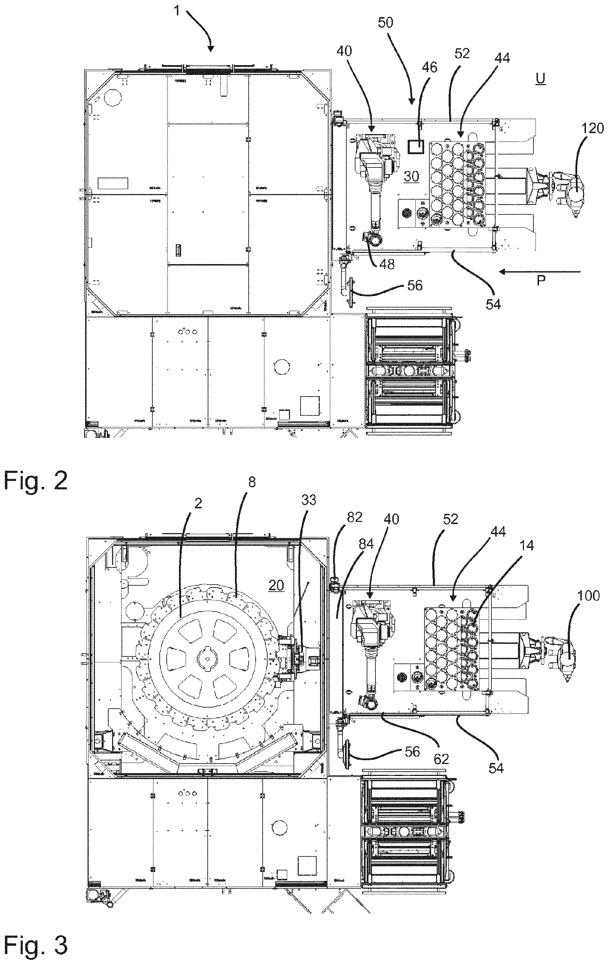

Fig. 2 zeigt eine schematische Darstellung einer erfindungsgemäßen Vorrichtung 1 mit Wechseleinrichtung. Dabei ist hier die Erwärmungseinrichtung nur noch teilweise bzw. schematisch dargestellt. Diese Vorrichtung weist hier die in ihrer Gesamtheit mit 50 bezeichnete Wechseleinrichtung bzw. das Modul 50 mit der Wechseleinrichtung 40 auf. Die Wechseleinrichtung bildet einen Schleusenraum 30 aus, der von mehreren Wandungen 52 und 54 umgeben wird. Der eigentliche Wechselroboter 40 weist eine Greifeinrichtung 48 auf, welche zum Greifen der Blasformeinrichtungen dient. Das Bezugszeichen 56 kennzeichnet eine Bedieneinrichtung wie ein Touchpanel, welches zur Bedienung der Wechseleinrichtung 40 dient, ohne hierbei in den Schleusenraum 30 eindringen zu müssen.

Das Bezugszeichen 44 kennzeichnet eine Magazineinrichtung, in der Blasformeinrichtungen aufgenommen sind. Man erkennt, dass ein Benutzer 120 diese Magazineinrichtung 44 hier in einer vorgegebenen Richtung P zuführen kann. Diese Richtung verläuft dabei parallel zu einer Längsrichtung der Erwärmungseinrichtung. Um die Magazinvorrichtung 44 einzubringen, kann eine Wand, welche den Schleusenraum 30 begrenzt, geöffnet werden. Daneben weist das Modul 50 auch eine Abdeckung auf, um den Schleusenraum 30 vollständig zu begrenzen. Das Bezugszeichen 46 kennzeichnet grob schematisch eine Beaufschlagungseinrichtung, um den Schleusenraum, bzw. in dem Schleusenraum 30 befindliche Elemente wie die Magazineinrichtung 44 oder die Wechseleinrichtung 40 mit einem Sterilisationsmedium zu beaufschlagen. Dabei wäre es möglich, dass innerhalb des Schleusenraums eine Vielzahl derartiger Beaufschlagungseinrichtungen vorgesehen ist, welche zum Sterilisieren dienen.

Fig. 3 zeigt eine detailliertere Darstellung einer erfindungsgemäßen Vorrichtung. Man erkennt hier die Transporteinrichtung 2, an der die einzelnen Umformungsstationen 8 transportiert werden. Das Bezugszeichen 33 kennzeichnet eine Zentriereinrichtung, welche die Transporteinrichtung 2 gegenüber der Wechseleinrichtung 40 bzw. dem Greifarm 48 positioniert. Die Bezugszeichen 82, 84 kennzeichnen eine Verbindungseinrichtung, über welche der Schleusenraum 30 bzw. das Wechselmodul an die Blasformeinrichtung angekoppelt ist.

Über diese Verbindungseinrichtung kann eine Verbindung zwischen den beiden Bereichen hergestellt werden. Auch diese Verbindung ist dabei bevorzugt gegenüber der Umgebung U gasdicht. Weiterhin ist hier bevorzugt ein Schließmechanismus vorgesehen mit dem die Verbindung zwischen dem Schleusenraum 30 und dem Reinraum 20 der Umformungseinrichtung unterbrochen werden kann. Das Bezugszeichen 14 kennzeichnet eine einzelne Blasformeinrichtung. Auch der Schleusenraum 30 kann über eine Verbindungstür 62 geöffnet werden, sodass der Benutzer auch Eingriffsmöglichkeiten hat. Bevorzugt ist sowohl auf Seiten des Moduls 50 ein Schließmechanismus vorgesehen, um die Schleusenraum abzugrenzen als auch auf Seiten der Umformungseinrichtung 1. So wäre es möglich, dass diese beiden (nicht gezeigten) Schließmechanismen geschlossen werden und anschließend das Modul 50 von der Umformungseinrichtung 1 entfernt wird, ohne dabei den Reinraum 20 oder den Schleusenraum 30 öffnen zu müssen.

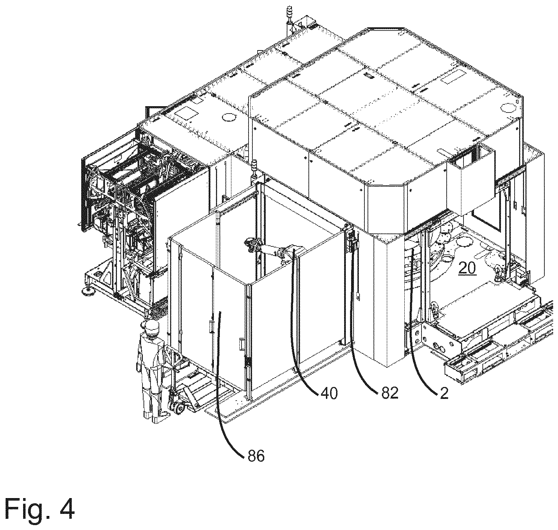

Fig. 4 zeigt eine perspektivische Darstellung der erfindungsgemäßen Vorrichtung. Auch hier ist wiederum eine Tür 86 erkennbar, welche geöffnet werden kann, damit der Benutzer eine Magazinvorrichtung in den Schleusenraum 30 einführen kann. Der den Schleusenraum begrenzende Deckenabschnitt ist hier nicht gezeigt.

### Bezugszeichenliste

- 2: Transporteinrichtung
- 6: Sterilisationseinrichtung
- 8: Umformungsstationen
- 10: Kunststoffvorformlinge
- 10a: Behältnisse
- 14: einzelne Blasformeinrichtung
- 16: Blasformträger
- 20: Reinraum
- 21: Wandung
- 30: Schleusenraum
- 32, 34, 36: Transporteinrichtungen
- 33: Zentriereinrichtung
- 40: Wechselroboter
- 44: Transportpfad/Magazineinrichtung
- 48: Greifeinrichtung
- 50: Wechseleinrichtung
- 52, 54: Wandungen
- 56: Bedienungseinrichtung/Touchpanel
- 60: Sterilisationseinrichtung
- 62: Verbindungstür
- 70: Erwärmungseinrichtung
- 72: Transportstern
- 74: Ausführstern
- 76: Transporteinrichtung
- 80: Fülleinrichtung
- 82, 84: Verbindungseinrichtung
- 86: Tür
- 92: Zuführeinrichtung
- 100: Anlage
- 120: Benutzer
- P: vorgegebene Richtung

## Patentansprüche

1. Vorrichtung zum Umformen von Kunststoffvorformlingen (10) zu Kunststoffbehältnissen (10a) mit einer Transporteinrichtung (2), welche die Kunststoffvorformlinge (10) entlang eines vorgegebenen Transportpfads transportiert, wobei die Transporteinrichtung (2) einen beweglichen Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen umformbar sind und diese Blasformeinrichtungen (14) jeweils an Blasformträgern (16) angeordnet sind, wobei die Vorrichtung einen Reinraum (20) aufweist, innerhalb dessen die Kunststoffvorformlinge zu den Kunststoffbehältnissen (10a) umformbar sind und dieser Reinraum (20) mittels wenigstens einer Wandung gegenüber einer unsterilen Umgebung abgegrenzt ist,
wobei die Vorrichtung (1) eine Wechseleinrichtung (40) aufweist, welche geeignet und dazu bestimmt ist, zumindest die Blasformeinrichtungen von deren Blasformträgern (16) zu entfernen und/oder Blasformeinrichtungen (14) an den Blasformträgern (16) anzuordnen, wobei diese Wechseleinrichtung (40) in ein von dem Reinraum (20) trennbares Modul (50) integriert ist und die Wechseleinrichtung (40) innerhalb eines Schleusenraums (30) angeordnet ist, der in Verbindung mit dem Reinraum (20) der Umformungseinrichtung (10) bringbar ist, wobei das Modul (50) der Wechseleinrichtung (40) selbst diesen Schleusenraum (30) ausbildet und innerhalb des Schleusenraums (30) sich die Wechseleinrichtung (40) mit weiteren Einrichtungen, wie einem Magazin für Blasformeinrichtungen (14) befindet und der Schleusenraum (30) gegenüber einer Umgebung gasdicht abgrenzbar ist, um innerhalb dieses Schleusenraums (30) sterile Bedingungen aufrechterhalten zu können,
**dadurch gekennzeichnet, dass**
die Wechseleinrichtung (40) eine Identifizierungseinrichtung in Form einer RFID-Erfassungseinrichtung aufweist, welche zum Identifizieren von Blasformen und/oder Blasformteilen dient und wenigstens eine Blasformeinrichtung (14) ein von der RFID-Erfassungseinrichtung auslesbares RFID-Element ist, und
die Wechseleinrichtung (40) Steuerungseinrichtungen aufweist, um die Wechseleinrichtung (40) zu steuern und Sensorelemente vorgesehen sind, welche Positionen der Blasformeinrichtungen erfassen oder auch eine Steuerung der Wechseleinrichtung in Abhängigkeit von derart erfassten Positionen ermöglichen, wobei die Steuerungseinrichtung für die Wechseleinrichtung (40) in einer Kommunikationsverbindung mit Steuerungseinrichtungen der Vorrichtung (1) steht.

2. Vorrichtung (1) nach Anspruch 1,
**dadurch gekennzeichnet, dass**
die Vorrichtung einen Verschließmechanismus aufweist, um eine Verbindung zwischen dem Schleusenraum (30) und dem Reinraum (20) zu verschließen.

3. Vorrichtung (1) nach wenigstens einem der vorangegangenen Ansprüche,
**dadurch gekennzeichnet, dass**
die Wechseleinrichtung eine Magazineinrichtung (44) zur Aufnahme von Blasformeinrichtungen (14) aufweist.

4. Vorrichtung (1) nach Anspruch 1,
**dadurch gekennzeichnet, dass**
die Vorrichtung eine Beaufschlagungseinrichtung (46) aufweist, um den Schleusenraum (30) mit einem Sterilisationsmedium zu beaufschlagen.

5. Vorrichtung (1) nach wenigstens einem der vorangegangenen Ansprüche,
**dadurch gekennzeichnet, dass**
die Vorrichtung (1) eine Sterilisationseinrichtung (6) zum Sterilisieren von Kunststoffvorformlingen (10) oder Kunststoffbehältnissen (10a) aufweist.

6. Vorrichtung (1) nach wenigstens einem der vorangegangenen Ansprüche,
**dadurch gekennzeichnet, dass**
das Modul (50) Schutzelemente (52, 54) zum Abgrenzen des Moduls (50) gegenüber der Umgebung (U) aufweist.

7. Vorrichtung (1) nach wenigstens einem der vorangegangenen Ansprüche,
**dadurch gekennzeichnet, dass**
das Modul (50) gegenüber der Umformungseinrichtung (1) bewegbar ist.

8. Verfahren zum Betreiben einer Umformungseinrichtung (1) zum Umformen von Kunststoffvorformlingen (10) zu Kunststoffbehältnissen (10a), wobei in einem Arbeitsbetrieb der Vorrichtung (1) die Kunststoffvorformlinge (10) mittels einer Vielzahl von Umformungsstationen (8) entlang eines vorgegebenen Transportpfads transportiert werden und durch Beaufschlagung mit einem fließfähigen Medium zu den Kunststoffbehältnissen (10a) expandiert werden, wobei zum Expandieren der Kunststoffvorformlinge (10) Blasformeinrichtungen (14) verwendet werden, in deren Inneren die Kunststoffvorformlinge (10) zu den Kunststoffbehältnissen (10a) expandiert werden, wobei in einem Wechselbetrieb zumindest eine der Blasformeinrichtungen (14) der Vorrichtung (1) entnommen wird und/oder eine der Blasformeinrichtungen (14) an einem Blasformträger (16) der Vorrichtung (1) angeordnet wird,
wobei zum Wechseln der Blasformeinrichtungen (14) eine Wechseleinrichtung (40) verwendet wird und diese Wechseleinrichtung (40) in ein von einem Reinraum (20) trennbares Modul (50) integriert ist und die Wechseleinrichtung (40) innerhalb eines Schleusenraums (30) angeordnet ist, der in Verbindung mit dem Reinraum (20) der Umformungseinrichtung (10) bringbar ist, wobei das Modul (50) der Wechseleinrichtung (40) selbst diesen Schleusenraum (30) ausbildet und innerhalb des Schleusenraums (30) sich die Wechseleinrichtung (40) mit weiteren Einrichtungen, wie einem Magazin für Blasformeinrichtungen (14) befindet und der Schleusenraum (30) gegenüber einer Umgebung gasdicht abgrenzbar ist, um innerhalb dieses Schleusenraums (30) sterile Bedingungen aufrechterhalten zu können,
**dadurch gekennzeichnet, dass**
die Wechseleinrichtung (40) eine Identifizierungseinrichtung in Form einer RFID-Erfassungseinrichtung aufweist, welche zum Identifizieren von Blasformen und/oder Blasformteilen dient und wenigstens eine Blasformeinrichtung (14) ein von der RFID-Erfassungseinrichtung auslesbares RFID-Element ist und
die Wechseleinrichtung (40) Steuerungseinrichtungen aufweist, um die Wechseleinrichtung (40) zu steuern und Sensorelemente vorgesehen sind, welche Positionen der Blasformeinrichtungen erfassen oder auch eine Steuerung der Wechseleinrichtung in Abhängigkeit von derart erfassten Positionen ermöglichen, wobei die Steuerungseinrichtung für die Wechseleinrichtung (40) in einer Kommunikationsverbindung mit Steuerungseinrichtungen der Vorrichtung (1) steht.

## Claims

1. Apparatus for forming plastic preforms (10) into plastic containers (10a) with a transport device (2) which transports the plastic preforms (10) along a predefined transport path, wherein the transport device (2) has a movable station carrier (12) on which a plurality of forming stations (8) are arranged, wherein these forming stations (8) each have blow-moulding devices (14), each forming cavities within which the plastic preforms (10) can be formed into plastic containers, and said blow-moulding devices (14) are arranged on respective blow-mould carriers (16), wherein the apparatus has a clean room (20) inside which the plastic preforms can be formed into the plastic containers (10a), and this clean room (20) is isolated from a non-sterile environment by means of at least one wall,
wherein the apparatus (1) has a change device (40) which is suitable and intended for at least removing the blow-moulding devices from their blow-mould carriers (16) and/or arranging blow-moulding devices (14) on the blow-mould carriers (16), wherein this change device (40) is integrated in a module (50) which can be separated from the clean room (20), and the change device (40) is arranged inside a lock room (30) which can be brought into connection with the clean room (20) of the forming device (10), wherein the module (50) of the change device (40) itself forms this lock room (30), and the change device (40) is situated inside the lock room (30) with further devices such as a magazine for blow-moulding devices (14), and the lock room (30) can be isolated gas-tightly from a environment in order to be able to maintain sterile conditions inside this lock room (30),
**characterised in that**
the change device (40) has an identification device in the form of an RFID detection device which serves for identifying blow moulds and/or blow-mould parts and at least one blow moulding device (14) is an RFID element which can be read by the RFID detection device and
the change device (40) has control devices for controlling the change device (40) and sensor elements are also provided which detect positions of the blow-moulding devices, or also allow control of the change device depending on such detected positions wherein the control device for the change device (40) is in communication connection with control devices of the apparatus (1).

2. Apparatus (1) according to claim 1,
**characterised in that**
the apparatus has a closing mechanism to close a connection between the lock chamber (30) and the clean room (20).

3. Apparatus (1) according to at least of the preceding claims,
**characterised in that**
the change device has a magazine device (44) for receiving blow-moulding devices (14).

4. Apparatus (1) according to claim 1,
**characterised in that**
the apparatus has an application device (46) for loading the lock room (30) with a sterilisation medium.

5. Apparatus according to at least one of the preceding claims,
**characterised in that**
the apparatus (1) has a sterilisation device (6) for sterilising plastic preforms (10) or plastic containers (10a).

6. Apparatus (1) according to at least one of the preceding claims,
**characterised in that**
the module (50) has protection elements (52, 54) for isolating the module (50) from the environment (U).

7. Apparatus (1) according to at least one of the preceding claims, **characterised in that**
the module (50) is movable relative to the forming device (1).

8. Method for operating a forming device (1) for forming plastic preforms (10) into plastic containers (10a), wherein in a working mode of the apparatus (1), the plastic preforms (10) are transported by means of a plurality of forming stations (8) along a predefined transport path, and by loading with a fluid medium are expanded into the plastic containers (10a), wherein to expand the plastic preforms (10), blow-moulding devices (14) are used, inside which the plastic preforms (10) are expanded into the plastic containers (10a), wherein in a change mode, at least one of the blow-moulding devices (14) is removed from the apparatus (1) and/or one of the blow-moulding devices (14) is arranged on a blow-mould carrier (16) of the apparatus (1),
wherein to change the blow-moulding devices (14), a change device (40) is used and this change device (40) is integrated in a module (50) which can be separated from the clean room (20), and the change device (40) is arranged inside a lock room (30) which can be brought into connection with the clean room (20) of the forming device (10), wherein the module (50) of the change device itself forms this lock room (30), and the change device (40) is situated inside the lock room (30) with further devices such as a magazine for blow-moulding devices (14), and the lock room (30) can be isolated gas-tightly from a environment in order to be able to maintain sterile conditions inside this lock room (30),
**characterised in that**
the change device (40) has an identification device in the form of an RFID detection device which serves for identifying blow moulds and/or blow-mould parts and at least one blow moulding device (14) is an RFID element which can be read by the RFID detection device and
the change device (40) has control devices for controlling the change device (40) and sensor elements are provided which detect positions of the blow-moulding devices, or also allow control of the change device depending on such detected positions wherein the control device for the change device (40) is in communication connection with control devices of the apparatus (1).

## Revendications

1. Dispositif de déformation de préformes en matière plastique (10) pour produire des récipients en matière plastique (10a) avec un dispositif de transport (2) qui transporte les préformes en matière plastique (10) le long d'un trajet de transport prédéfini, dans lequel le dispositif de transport (2) présente un support de station (12) mobile, au niveau duquel une pluralité de stations de déformation (8) est agencée, dans lequel ces stations de déformation (8) présentent respectivement des dispositifs de formage par soufflage (14) qui réalisent respectivement des espaces creux, à l'intérieur desquels les préformes en matière plastique (10) peuvent être déformées pour produire des récipients en matière plastique et ces dispositifs de formage par soufflage (14) sont agencés respectivement au niveau de supports de moule de soufflage (16), dans lequel le dispositif présente un espace blanc (20), à l'intérieur duquel les préformes en matière plastique peuvent être déformées pour produire des récipients en matière plastique (10a) et cet espace blanc (20) est délimité au moyen d'au moins une paroi par rapport à un environnement non-stérile,
dans lequel le dispositif (1) présente un dispositif de changement (40) qui est approprié et destiné à retirer au moins les dispositifs de formage par soufflage de leurs supports de moule de soufflage (16) et/ou d'agencer des dispositifs de formage par soufflage (14) au niveau des supports de moule de soufflage (16), dans lequel ce dispositif de changement (40) est intégré dans un module (50) séparable de l'espace blanc (20) et le dispositif de changement (40) est agencé à l'intérieur d'un espace sas (30) qui peut être amené en liaison avec l'espace blanc (20) du dispositif de déformation (10), dans lequel le module (50) du dispositif de changement (40) même réalise cet espace sas (30) et à l'intérieur de l'espace sas (30) se trouve le dispositif de changement (40) avec d'autres dispositifs comme un magasin pour des dispositifs de formage par soufflage (14) et l'espace sas (30) peut être délimité de manière étanche au gaz par rapport à un environnement afin de pouvoir conserver des conditions stériles à l'intérieur de cet espace sas (30),
**caractérisé en ce que**
le dispositif de changement (40) présente un dispositif d'identification sous la forme d'un dispositif de détection RFID qui sert à l'identification de moules de soufflage et/ou parties de moules de soufflage et au moins un dispositif de formage par soufflage (14) est un élément RFID lisible par le dispositif de détection RFID, et
le dispositif de changement (40) présente des dispositifs de commande afin de commander le dispositif de changement (40) et des éléments capteurs sont prévus, lesquels détectent des positions des dispositifs de formage par soufflage ou permettent aussi une commande du dispositif de changement en fonction des positions détectées de la sorte, dans lequel le dispositif de commande pour le dispositif de changement (40) est dans une liaison de communication avec des dispositifs de commande du dispositif (1).

2. Dispositif (1) selon la revendication 1,
**caractérisé en ce que**
le dispositif présente un mécanisme de fermeture afin de fermer une liaison entre l'espace sas (30) et l'espace blanc (20).

3. Dispositif (1) selon au moins l'une des revendications précédentes,
**caractérisé en ce que**
le dispositif de changement présente un dispositif de magasin (44) pour la réception de dispositifs de formage par soufflage (14).

4. Dispositif (1) selon la revendication 1,
**caractérisé en ce que**
le dispositif présente un dispositif d'alimentation (46) afin d'alimenter l'espace sas (30) avec un milieu de stérilisation.

5. Dispositif (1) selon au moins l'une des revendications précédentes,
**caractérisé en ce que**
le dispositif (1) présente un dispositif de stérilisation (6) pour la stérilisation de préformes en matière plastique (10) ou récipients en matière plastique (10a).

6. Dispositif (1) selon au moins l'une des revendications précédentes,
**caractérisé en ce que**
le module (50) présente des éléments de protection (52, 54) pour la délimitation du module (50) contre l'environnement (U).

7. Dispositif (1) selon au moins l'une des revendications précédentes,
**caractérisé en ce que**
le module (50) est mobile par rapport au dispositif de déformation (1).

8. Procédé de fonctionnement d'un dispositif de déformation (1) pour la déformation de préformes en matière plastique (10) pour produire des récipients en matière plastique (10a), dans lequel dans un mode de travail du dispositif (1) les préformes en matière plastique (10) sont transportées au moyen d'une pluralité de stations de déformation (8) le long d'un trajet de transport prédéfini et sont expansées par alimentation avec un milieu coulant pour produire les préformes en matière plastique (10a), dans lequel des dispositifs de formage par soufflage (14) sont utilisés pour l'expansion des préformes en matière plastique (10), à l'intérieur desquels les préformes en matière plastique (10) sont expansées pour produire les récipients en matière plastique (10a), dans lequel dans un mode de changement au moins un des dispositifs de formage par soufflage (14) du dispositif (1) est retiré et/ou un des dispositifs de formage par soufflage (14) est agencé au niveau d'un support de formage par soufflage (16) du dispositif (1), dans lequel un dispositif de changement (40) est utilisé pour le changement des dispositifs de formage par soufflage (14) et ce dispositif de changement (40) est intégré dans un module (50) séparable d'un espace blanc (20) et le dispositif de changement (40) est agencé à l'intérieur d'un espace sas (30) qui peut être amené en liaison avec l'espace blanc (20) du dispositif de déformation (10), dans lequel le module (50) du dispositif de changement (40) même réalise cet espace sas (30) et à l'intérieur de l'espace sas (30) se trouve le dispositif de changement (40) avec d'autres dispositifs comme un magasin pour des dispositifs de formage par soufflage (14) et l'espace sas (30) peut être délimité de manière étanche au gaz par rapport à un environnement afin de pouvoir conserver à l'intérieur de cet espace sas (30) des conditions stériles,
**caractérisé en ce que**
le dispositif de changement (40) présente un dispositif d'identification sous la forme d'un dispositif de détection RFID qui sert à l'identification de moules de soufflage et/ou parties de moule de soufflage et au moins un dispositif de formage par soufflage (14) est un élément RFID lisible par le dispositif de détection RFID, et
le dispositif de changement (40) présente des dispositifs de commande afin de commander le dispositif de changement (40) et des éléments capteurs sont prévus, lesquels détectent des positions des dispositifs de formage par soufflage ou permettent aussi une commande du dispositif de changement en fonction de positions détectées de la sorte, dans lequel le dispositif de commande pour le dispositif de changement (40) est dans une liaison de communication avec des dispositifs de commande du dispositif (1).
